# EUROPEAN PATENT SPECIFICATION

(11) **EP 3 957 470 B1**
(45) Date of publication and mention of the grant of the patent: **07.06.2023**
(21) Application number: 21191671.3
(22) Date of filing: 17.08.2021
(51) Int. Cl.: B29D 30/02, B60C 7/14, B60C 7/18

(54) **MANUFACTURING METHOD FOR AIRLESS TIRE**
HERSTELLUNGSVERFAHREN VON LUFTLOSEN REIFEN
PROCÉDÉ DE FABRICATION DE PNEU SANS AIR

(30) Priority: 19.08.2020 JP 2020138473
(43) Date of publication of application: 23.02.2022
(73) Proprietor: Sumitomo Rubber Industries, Ltd., Kobe-shi, Hyogo-ken 651-0072 (JP)
(72) Inventor: SUGIYA, Makoto, Kobe-shi, 651-0072 (JP); OHIGASHI, Hiroshi, Kobe-shi, 651-0072 (JP); KITANO, Hisao, Kobe-shi, 651-0072 (JP)
(74) Representative: Manitz Finsterwald Patent- und Rechtsanwaltspartnerschaft mbB

(56) References cited:
- EP-A1- 3 144 160
- WO-A1-2019/119155

## Description

### BACKGROUND OF THE INVENTION

### Field of the Invention

The present invention relates to a manufacturing method for an airless tire.

### Description of the Background Art

Japanese Laid-Open Patent Publication No. 2018-153932 describes a manufacturing method for an airless tire. The manufacturing method includes: a step of setting a hub and a tread ring in a casting mold; and a casting step of pouring a raw material liquid of a polymer material into a space between the hub and the tread ring and then curing the raw material liquid, thereby integrating spokes, the tread ring, and the hub.

In the manufacturing method, since a thermosetting resin is used as the polymer material, there is a problem that it takes a long time to cure the thermosetting resin. In addition, since the raw material liquid of the polymer material is injected into the mold without applying pressure, it takes time to inject the raw material liquid, and air bubbles may remain in the polymer material, leading to poor quality. Therefore, improvement of the productivity of airless tires has been desired.

A manufacturing method for an airless tire in accordance with the preamble of claim 1 is known from EP 3 144 160 A1.

The present invention has been made in view of the above circumstances, and a main object of the present invention is to provide a manufacturing method for an airless tire, which can improve productivity.

### SUMMARY OF THE INVENTION

The present invention is directed to a manufacturing method for an airless tire including an annular tread ring having a ground-contact surface, a hub disposed inward of the tread ring in a tire radial direction, and a spoke portion connecting the tread ring and the hub, the manufacturing method including: a step of preparing the tread ring and the hub; a step of placing the tread ring and the hub in an integral molding mold; a step of injecting a thermoplastic resin between the tread ring and the hub in the integral molding mold and molding the spoke portion connecting the tread ring and the hub, to integrally mold the airless tire; and a step of taking out the airless tire from the integral molding mold.

The manufacturing method for the airless tire according to the present invention further includes a step of applying an adhesive for enhancing adhesiveness with the thermoplastic resin to an inner circumferential surface of the tread ring prior to the placing step.

The manufacturing method for the airless tire according to the present invention may further include a step of applying an adhesive for enhancing adhesiveness with the thermoplastic resin to an outer circumferential surface of the hub prior to the placing step.

In the manufacturing method for the airless tire according to the present invention, a layer thickness of the adhesive may be 5 to 50 µm.

The manufacturing method for the airless tire according to the present invention may further include a step of preheating the adhesive.

The manufacturing method for the airless tire according to the present invention may further include a step of preheating the tread ring such that a surface temperature of the tread ring is not lower than 50°C.

In the manufacturing method for the airless tire according to the present invention, the thermoplastic resin may include a polyester resin, a polyamide resin, or a polyurethane resin.

In the manufacturing method for the airless tire according to the present invention, the integral molding mold may include a first cavity portion for accommodating the tread ring, a second cavity portion for accommodating the hub, and a third cavity portion for molding the spoke portion, the third cavity portion communicating with the first cavity portion and the second cavity portion.

In the manufacturing method for the airless tire according to the present invention, an injection gate for the thermoplastic resin may communicate with the hub side of the third cavity portion.

In the manufacturing method for the airless tire according to the present invention, the thermoplastic resin may be injected by a cylinder whose temperature has been adjusted to 180 to 250°C.

The present invention includes a step of injecting the thermoplastic resin between the tread ring and the hub placed in the integral molding mold and molding the spoke portion to integrally mold the airless tire. Therefore, the curing time of the spoke portion can be shortened as compared with that in the case where such a spoke portion is formed from a thermosetting resin. In addition, since the thermoplastic resin is rapidly injected while pressure is applied thereto, it becomes difficult for air bubbles and the like to remain in the thermoplastic resin, and as a result, poor quality is suppressed. Therefore, in the present embodiment, the productivity of the airless tire can be improved.

### BRIEF DESCRIPTION OF THE DRAWINGS

FIG. 1 is a side view showing an example of an airless tire manufactured by a manufacturing method according to an embodiment;
FIG. 2 is a perspective view of the airless tire manufactured by the manufacturing method according to the embodiment;
FIG. 3 is an enlarged cross-sectional view of a main part in FIG. 1;
FIG. 4 is a plan view showing an example of an integral molding mold;
FIG. 5 is a plan view showing an example of a tread ring and a hub placed in the integral molding mold; and
FIG. 6 is a plan view showing an example of a state where a thermoplastic resin is injected between the tread ring and the hub.

### DESCRIPTION OF THE PREFERRED EMBODIMENTS

Hereinafter, an embodiment of the present invention will be described with reference to the drawings.

It should be understood that the drawings contain exaggerated expressions and expressions that differ from the dimensional ratio of the actual structure in order to help the understanding of the present invention. In addition, when there are a plurality of embodiments, the same or common elements are denoted by the same reference characters throughout the description, and the redundant description thereof is omitted. Furthermore, the specific configurations shown in the embodiment and the drawings are for understanding the contents of the present invention, and the present invention is not limited to the specific configurations shown.

### [Basic Structure of Airless Tire]

First, the basic structure of an airless tire will be described prior to the description of the manufacturing method according to the present invention.

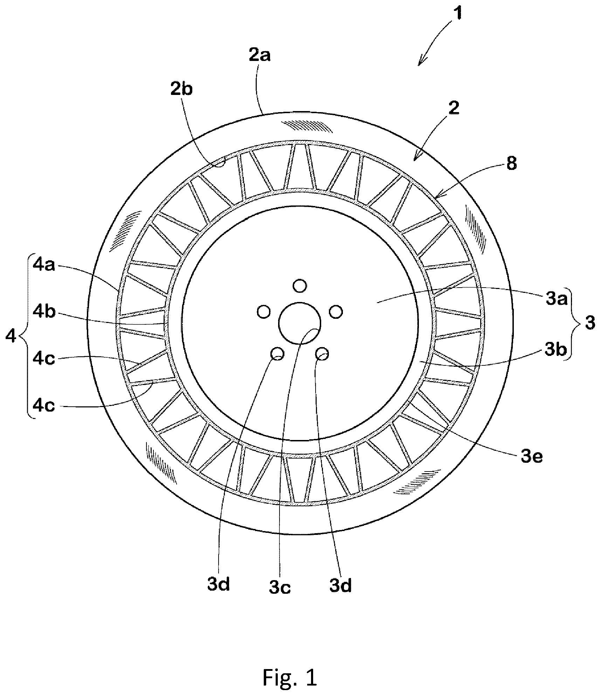

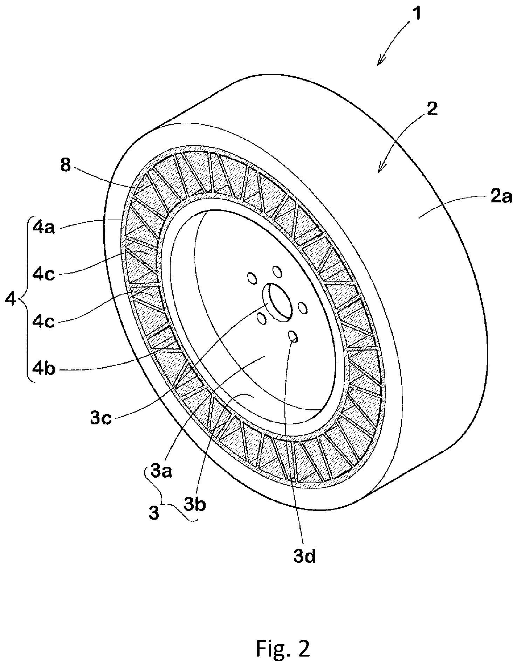

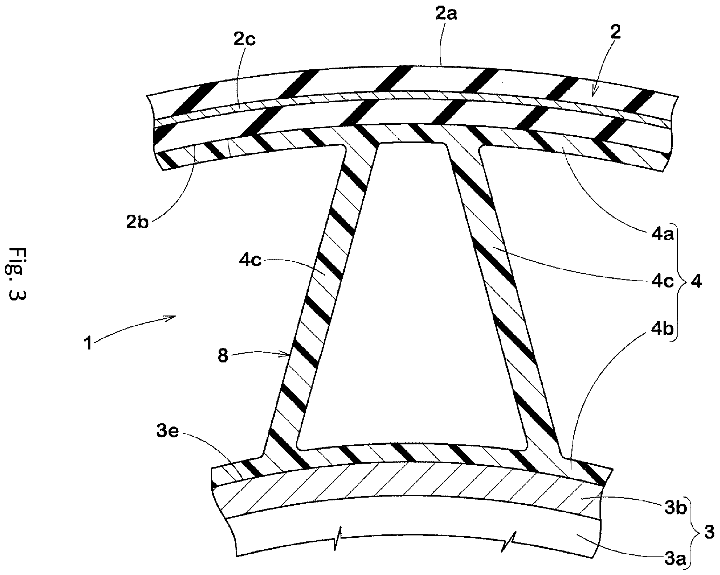

FIG. 1 is a side view showing an example of an airless tire 1 manufactured by a manufacturing method according to the present embodiment. FIG. 2 is a perspective view of the airless tire 1, and FIG. 3 is an enlarged cross-sectional view of a main part in FIG. 1. As shown in FIG. 1 to FIG. 3, the airless tire 1 includes a tread ring 2, a hub 3 disposed inward of the tread ring 2 in the tire radial direction, and a spoke portion 4 connecting the tread ring 2 and the hub 3.

### [Tread Ring]

The tread ring 2 is an annular rubber member. The tread ring 2 is formed from, for example, a vulcanized rubber. An outer surface in the tire radial direction of the tread ring 2 is formed as a ground-contact surface 2a for coming into contact with the ground (road surface). Various drainage grooves (not shown) may be formed on the ground-contact surface 2a. In addition, the spoke portion 4 described later is joined to an inner circumferential surface 2b in the tire radial direction of the tread ring 2.

In a preferred mode, a reinforcing cord layer 2c (shown in FIG. 3) is disposed inside the tread ring 2. The reinforcing cord layer 2c is composed of, for example, a layer in which a plurality of organic fiber cords or steel cords are oriented in a predetermined direction. Such a reinforcing cord layer 2c serves to increase the stiffness in the tire circumferential direction and/or the tire axial direction of the tread ring 2 and improve steering stability. Furthermore, a resin material may be added to or combined with a part of the tread ring 2.

### [Hub]

The hub 3 is for fixing an axle. As for the hub 3 of the present embodiment, the case where the hub 3 is made of metal is described as an example. The hub 3 integrally includes, for example, a disc portion 3a and a cylindrical portion 3b formed outward of the disc portion 3a in the tire radial direction. The disc portion 3a is disposed concentrically with the tread ring 2. For example, a center bore 3c, mounting holes 3d, and the like are formed in the disc portion 3a.

### [Spoke Portion]

The spoke portion 4 is formed between the tread ring 2 and the hub 3 and integrally connects the tread ring 2 and the hub 3.

The spoke portion 4 is formed from a resin material. The spoke portion 4 has a function of absorbing vibration during tire running and improving ride comfort performance. Therefore, the resin material of the spoke portion 4 is preferably, for example, a material having strength capable of sufficiently exerting load bearing capacity. The spoke portion 4 of the present embodiment is formed from a thermoplastic resin 8. As the thermoplastic resin 8, for example, a polyester resin, a polyamide resin, or a polyurethane resin is preferably adopted. The "resin" includes an elastomer.

The spoke portion 4 of the present embodiment integrally includes, for example, an outer ring portion 4a on the outer side in the tire radial direction, an inner ring portion 4b on the inner side in the tire radial direction, and a plurality of spoke elements 4c.

The outer ring portion 4a is, for example, an annular body joined to the inner circumferential surface 2b of the tread ring 2.

The inner ring portion 4b is an annular body joined to an outer circumferential surface (more specifically, the outer circumferential surface of the cylindrical portion 3b) 3e (shown in FIG. 3) of the hub 3.

Each spoke element 4c extends in the tire radial direction and connects the outer ring portion 4a and the inner ring portion 4b to each other. Each spoke element 4c can, for example, bend during running to alleviate the impact inputted to the tread ring 2. The shape, etc., of each spoke element 4c are not limited to the illustrated mode, and various modes, such as those extending in a zigzag manner in the tire radial direction or circumferential direction and those extending in a mesh manner in a cross-section in the tire circumferential direction, may be adopted.

### [Manufacturing Method for Airless Tire]

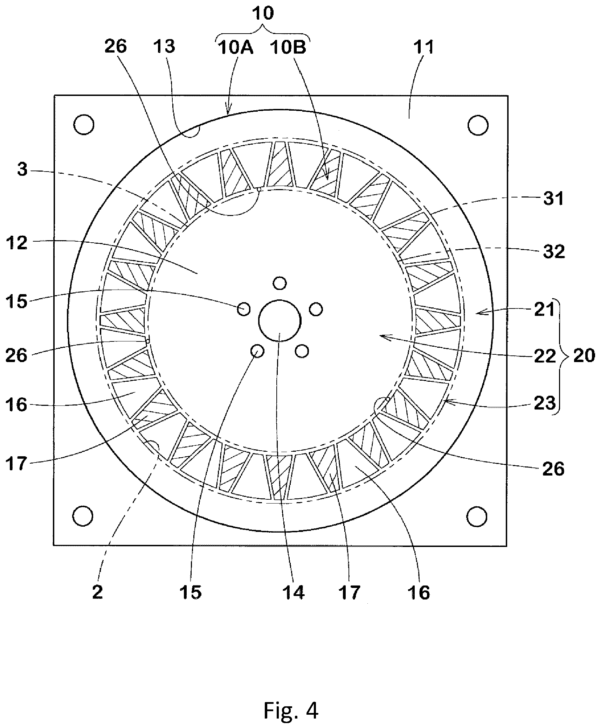

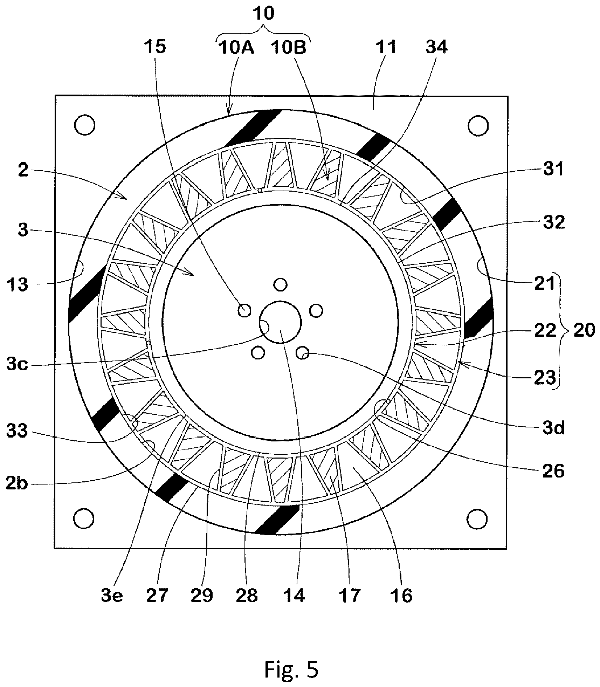

Next, a manufacturing method for the airless tire 1 will be described. FIG. 4 is a plan view showing an example of an integral molding mold 10. FIG. 5 is a plan view showing an example of the tread ring 2 and the hub 3 placed in the integral molding mold 10.

### [Preparing Tread Ring And Hub]

The present embodiment includes a step of preparing the tread ring 2 and the hub 3 shown in FIG. 5. The tread ring 2 can be obtained, for example, by molding an unvulcanized rubber material, a cord material, etc., into a predetermined shape and vulcanizing the molded article with a mold or the like according to a conventional method. Meanwhile, the hub 3 can be manufactured by various methods such as casting, forging, and cutting.

### [Placing Tread Ring And Hub in Integral Molding Mold]

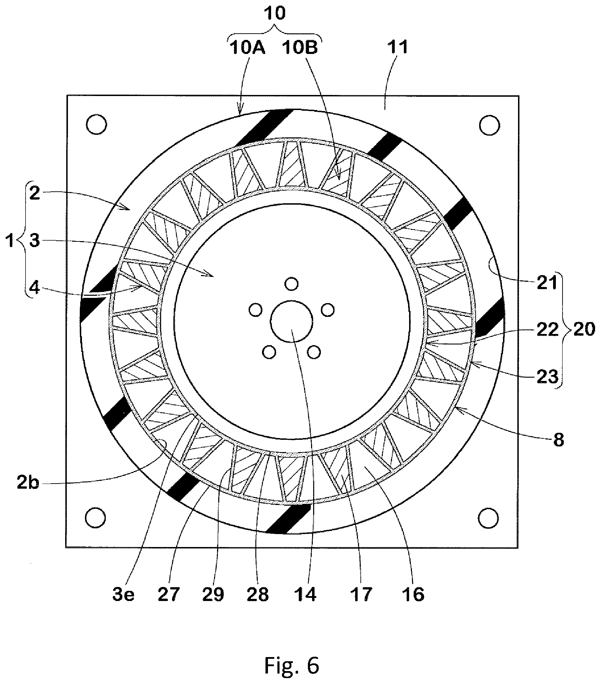

The present embodiment includes a step of placing the tread ring 2 and the hub 3 in the integral molding mold 10 as shown in FIG. 5. As shown in FIG. 6, the integral molding mold 10 is for molding the spoke portion 4 connecting the tread ring 2 and the hub 3, to integrally mold the airless tire 1.

As shown in FIG. 4, the integral molding mold 10 includes, for example, a lower mold portion 10A and an upper mold portion 10B which is movable relative to the lower mold portion 10A in the up-down direction. In FIG. 4 to FIG. 6, in a state where the upper mold portion 10B and the lower mold portion 10A are closed, a lower side with respect to a contact surface 11 therebetween is shown, and the upper mold portion 10B is shown as a cross-section thereof.

As shown in FIG. 4, a cavity 20 composed of a columnar recess is formed in the lower mold portion 10A of the integral molding mold 10. The cavity 20 essentially includes a circular bottom surface 12 and an inner circumferential surface 13 extending upward from the bottom surface 12, and an upper portion of the cavity 20 is closed by the upper mold portion 10B.

The cavity 20 includes a first cavity portion 21, a second cavity portion 22, and a third cavity portion 23. In FIG. 4, in order to help understanding these, a first boundary 31 between the first cavity portion 21 and the third cavity portion 23 and a second boundary 32 between the second cavity portion 22 and the third cavity portion 23 are each indicated by an alternate long and two short dashes line (virtual line).

The first cavity portion 21 is a space for accommodating the prepared tread ring 2 (shown in FIG. 5). In the present embodiment, the outer circumferential surface of the tread ring 2 is located so as to be substantially aligned with the inner circumferential surface 13 of the cavity 20. Therefore, in this state, a position corresponding to the inner circumferential surface 2b (shown in FIG. 5) of the tread ring 2 essentially defines the first boundary 31 (indicated by an alternate long and two short dashes line) between the first cavity portion 21 and the third cavity portion 23.

The second cavity portion 22 is a space for accommodating the prepared hub 3 (shown in FIG. 5). Projection shafts 14 and 15 are provided in the second cavity portion 22 so as to extend upward from the bottom surface 12. The hub 3 is placed in the second cavity portion 22 with the axis thereof extending in the up-down direction, and substantially fills the second cavity portion 22. In other words, the outer circumferential surface 3e (shown in FIG. 5) of the hub 3 essentially defines the second boundary 32 (indicated by an alternate long and two short dashes line) between the second cavity portion 22 and the third cavity portion 23.

As shown in FIG. 5, the center bore 3c and the mounting holes 3d of the hub 3 are inserted onto the projection shafts 14 and 15 of the second cavity portion 22. This serves to accurately position the hub 3 with respect to the second cavity portion 22.

As shown in FIG. 4 and FIG. 5, the third cavity portion 23 is a space for molding the spoke portion 4 between the tread ring 2 placed in the first cavity portion 21 and the hub 3 placed in the second cavity portion 22. As shown in FIG. 4, the third cavity portion 23 provides communication between the first cavity portion 21 and the second cavity portion 22. The third cavity portion 23 of the present embodiment is defined by the bottom surface 12 of the lower mold portion 10A, a plurality of projections 16, a plurality of projections 17, the first boundary 31 (inner circumferential surface 2b shown in FIG. 5), the second boundary 32 (outer circumferential surface 3e shown in FIG. 5), and the upper mold portion 10B.

The plurality of projections 16 extend upward from the bottom surface 12 of the lower mold portion 10A. Meanwhile, the plurality of projections 17 extend downward from the upper mold portion 10B. When the lower mold portion 10A and the upper mold portion 10B are closed, these projections 17 each enter between the projections 16 of the lower mold portion 10A to define the third cavity portion 23. Injection gates 26 for injecting the thermoplastic resin 8 (shown in FIG. 6) into the third cavity portion 23 communicate with the hub 3 (shown in FIG. 5) side of the third cavity portion 23 of the present embodiment.

As shown in FIG. 5, an annular first gap 27 for forming the outer ring portion 4a (shown in FIG. 1) of the spoke portion 4 is formed between each projection 16, 17 and the inner circumferential surface 2b of the tread ring 2. Similarly, an annular second gap 28 for forming the inner ring portion 4b (shown in FIG. 1) of the spoke portion 4 is formed between each projection 16, 17 and the outer circumferential surface 3e of the hub 3. In the present embodiment, the multiple injection gates 26 communicate with the second gap 28.
Furthermore, a third gap 29 for forming the spoke element 4c (shown in FIG. 1) is formed between the projections 16 and 17 adjacent to each other in the circumferential direction.

The first gap 27 to the third gap 29 communicate with each other. Therefore, by injecting the softened thermoplastic resin 8 (shown in FIG. 6) into the second gap 28 via the injection gates 26, the thermoplastic resin 8 can be caused to flow from the second gap 28 via the third gap 29 to fill the first gap 27.

The above tread ring 2 and hub 3 are placed in the integral molding mold 10 configured as described above. Specifically, the integral molding mold 10 is opened, and as shown in FIG. 5, the tread ring 2 is placed in the first cavity portion 21 of the lower mold portion 10A, and the hub 3 is placed in the second cavity portion 22. Then, the upper mold portion 10B is fitted to the lower mold portion 10A to close the integral molding mold 10. Accordingly, in the present embodiment, the tread ring 2 and the hub 3 are placed in the integral molding mold 10.

Prior to the placement of the tread ring 2, the inner circumferential surface 2b of the tread ring 2 may be subjected, for example, to a surface treatment (not shown) in order to enhance the adhesive force between the tread ring 2 and the spoke portion 4. Furthermore, prior to the placement of the hub 3, the outer circumferential surface 3e of the hub 3 may be subjected, for example, to a base treatment (not shown) such as shot blasting in order to enhance the adhesive force between the hub 3 and the spoke portion 4.

### [Molding Spoke Portion]

The present embodiment includes a step of injecting the thermoplastic resin 8 between the tread ring 2 and the hub 3 in the integral molding mold 10 to mold the spoke portion 4 connecting the tread ring 2 and the hub 3. The airless tire 1 is integrally molded by molding the spoke portion 4. FIG. 6 is a plan view showing an example of a state where the thermoplastic resin 8 is injected between the tread ring 2 and the hub 3.

As shown in FIG. 6, in the present embodiment, the softened thermoplastic resin 8 is injected (injected under pressure) into the third cavity portion 23 (first gap 27 to the third gap 29) via the injection gates 26 (shown in FIG. 5). Accordingly, the thermoplastic resin 8 is caused to fill the space between the tread ring 2 and the hub 3 in the integral molding mold 10.

For the injection of the thermoplastic resin 8, for example, an injection molding machine (not shown) is used according to a conventional method. The injection molding machine includes a cylinder (not shown) for heating the thermoplastic resin 8 and a screw (not shown) for rotating inside the cylinder and injecting the thermoplastic resin 8 while applying pressure to the thermoplastic resin 8. The cylinder is configured such that the temperature thereof can be adjusted by heating means such as a heater, and is connected to the injection gates 26. The heated and softened (plasticized) thermoplastic resin 8 is injected (injected under pressure) into the third cavity portion 23 (first gap 27 to the third gap 29) via the injection gates 26 (shown in FIG. 5) by such an injection molding machine.

Next, the thermoplastic resin 8 is cooled and cured in the integral molding mold 10 (third cavity portion 23). Accordingly, the spoke portion 4 connecting the tread ring 2 and the hub 3 is molded, so that the airless tire 1 in which the tread ring 2, the hub 3, and the spoke portion 4 are integrally molded is obtained.

### [Taking Out Airless Tire]

The present embodiment includes a step of taking out the airless tire 1 from the integral molding mold 10. Specifically, the integral molding mold 10 is opened, and the airless tire 1 is taken out therefrom.

As for the airless tire 1 manufactured as described above, since the spoke portion 4 is formed from the thermoplastic resin 8, for example, the curing time of the thermoplastic resin 8 (molding time of the spoke portion 4) can be shortened as compared with that in the case where such a spoke portion is formed from a thermosetting resin that needs to be cured by heating during molding. In addition, since the thermoplastic resin 8 is rapidly injected while pressure is applied thereto, it becomes difficult for air bubbles and the like to remain in the thermoplastic resin 8, and as a result, poor quality (decrease in durability, etc.) is suppressed. Therefore, in the present embodiment, the productivity of the airless tire 1 can be improved.

In the present embodiment, molding of the spoke portion 4, connection between the spoke portion 4 and the tread ring 2, and connection between the spoke portion 4 and the hub 3 can be performed at the same time. Therefore, in the present embodiment, the airless tire 1 can be efficiently manufactured.

As shown in FIG. 5, the injection gates 26 of the present embodiment communicate with the hub 3 side of the third cavity portion 23. Therefore, in the manufacturing method according to the present embodiment, a gate residue (not shown) which is slightly and easily formed near the injection gates 26 can be formed on the hub 3 side where such a gate residue is less noticeable in the airless tire 1 (shown in FIG. 2). Therefore, in the present embodiment, the appearance of the airless tire 1 can be improved.

Since a polyester resin, a polyamide resin, or a polyurethane resin is adopted as the thermoplastic resin 8 of the present embodiment, for example, the viscosity of the thermoplastic resin 8 at the time of injection can be higher than that of a thermosetting resin having a low viscosity at the time of injection. Such a thermoplastic resin 8 can be prevented from flowing into a fine gap (not shown) formed at the split position of the integral molding mold 10, as compared with the thermosetting resin. Accordingly, in the present embodiment, the occurrence of molding defects such as burrs formed at the fine gap is suppressed, so that it is possible to shorten the time required to remove such molding defects. Therefore, in the present embodiment, the productivity of the airless tire 1 can be improved, and the appearance of the airless tire 1 can also be improved.

The thermoplastic resin 8 is preferably injected by a cylinder (not shown) whose temperature has been adjusted to 180 to 250°C. Since the temperature of the cylinder has been adjusted to 250°C or lower, the thermoplastic resin 8 can be prevented from being heated to a temperature higher than necessary, so that thermal deterioration of the tread ring 2 and adhesives 33 and 34 (shown in FIG. 5) described later can be prevented. Therefore, in the present embodiment, it is possible to manufacture the airless tire 1 that can exhibit excellent durability. Furthermore, since the viscosity of the softened thermoplastic resin 8 at the time of injection can be prevented from being decreased more than necessary, the thermoplastic resin 8 can be effectively prevented from flowing into the fine gap of the integral molding mold 10, so that the productivity of the airless tire 1 can be improved.

Meanwhile, since the temperature of the cylinder (not shown) has been adjusted to 180°C or higher, the thermoplastic resin 8 can be reliably softened, so that the moldability of the spoke portion 4 can be maintained. Therefore, it is possible to manufacture the airless tire 1 that can exhibit excellent durability. In order to effectively exert such an effect, the thermoplastic resin 8 is preferably injected by a cylinder whose temperature has been adjusted to 220°C or lower, and is preferably injected by a cylinder whose temperature has been adjusted to 200°C or higher.

### [Preheating Tread Ring]

In the present embodiment, a step of preheating the tread ring 2 prior to the step of placing the tread ring 2 and the hub 3 shown in FIG. 5 ("Placing Tread Ring And Hub in Integral Molding Mold" described above) may be included. Accordingly, the preheated tread ring 2 is placed in the integral molding mold 10. Then, the thermoplastic resin 8 is injected between the preheated tread ring 2 and the hub 3.

In the step of molding the spoke portion 4 shown in FIG. 6 ("Molding Spoke Portion" described above), the thermoplastic resin 8 is injected between the preheated tread ring 2 and the hub 3. The tread ring 2 can be preheated as appropriate, for example, by using a warmer (not shown) such as an oven provided separately from the integral molding mold 10.

In the step of preheating the tread ring 2, the tread ring 2 is preferably preheated to a temperature higher than the temperature of the integral molding mold 10 (shown in FIG. 6). By such preheating, in a step of "Applying Adhesive to Inner Circumferential Surface of Tread Ring" described later, the adhesive 33 can be preheated and activated. Accordingly, the adhesiveness between the tread ring 2 and the thermoplastic resin 8 can be enhanced, so that it is possible to manufacture the airless tire 1 that can exhibit excellent durability.

In order to effectively exert such an effect, the tread ring 2 is preferably preheated such that the surface temperature of the tread ring 2 is not lower than 50°C, and further preferably preheated such that the surface temperature of the tread ring 2 is not lower than 70°C.

On the other hand, if the preheating temperature of the tread ring 2 becomes higher than necessary, the tread ring 2 may be deteriorated. The tread ring 2 is preferably preheated such that the surface temperature of the tread ring 2 is not higher than 160°C.

### [Applying Adhesive to Inner Circumferential Surface of Tread Ring]

According to the invention, a step of applying the adhesive 33 to the inner circumferential surface 2b of the tread ring 2 prior to the step of placing the tread ring 2 and the hub 3 shown in FIG. 5 ("Placing Tread Ring And Hub in Integral Molding Mold" described above) is further included. The adhesive 33 is for enhancing the adhesiveness with the thermoplastic resin 8 (shown in FIG. 6).

The adhesive 33 can be selected as appropriate as long as the adhesiveness with the thermoplastic resin 8 (shown in FIG. 6) can be enhanced. Examples of the adhesive 33 include latex type adhesives, solvent type adhesives, and reactive type adhesives. In the case where the spoke portion 4 is formed from the above thermoplastic resin 8, for example, trade name "Chemlock" manufactured by Lord Corporation is preferably adopted as the adhesive 33 of the present embodiment.

According to the invention, the adhesive force between the tread ring 2 and the thermoplastic resin 8 (shown in FIG. 6), which forms the spoke portion 4, is enhanced by applying the adhesive 33 to the inner circumferential surface 2b of the tread ring 2. Therefore,, it is possible to manufacture the airless tire 1 that can exhibit excellent durability, while improving the moldability of the airless tire 1.

In order to enhance the adhesiveness between the tread ring 2 and the thermoplastic resin 8, a layer thickness (not shown) of the adhesive 33 is preferably set to 5 to 50 µm. When the layer thickness is set so as to be not smaller than 5 µm, the above adhesiveness can be enhanced. On the other hand, when the layer thickness is set so as to be not larger than 50 µm, a cured product (not shown) of the adhesive 33 can be prevented from becoming thicker than necessary. Accordingly, breakage of the cured product of the adhesive 33 due to strain or the like generated between the tread ring 2 and the spoke portion 4 during running can be prevented. In order to effectively exert such an effect, the layer thickness is preferably not smaller than 15 µm and is preferably not larger than 35 µm.

### [Preheating Adhesive]

The manufacturing method according to the present embodiment may further include a step of preheating the adhesive 33. The preheating step is performed separately from preheating of the adhesive 33 by the preheating of the tread ring 2. The step of preheating the adhesive 33 in the present embodiment is performed prior to the step of placing the tread ring 2 and the hub 3 ("Placing Tread Ring And Hub in Integral Molding Mold" described above).

The above adhesive 33 tends to be activated and cured by heating. Therefore, in the manufacturing method according to the present embodiment, by preheating and curing the adhesive 33, falling of the adhesive 33 from the inner circumferential surface 2b of the tread ring 2 due to the pressure of the thermoplastic resin 8 (shown in FIG. 6) injected thereafter can be prevented. Therefore, in the present embodiment, the adhesiveness between the inner circumferential surface 2b of the tread ring 2 and the thermoplastic resin 8 can be reliably improved, so that it is possible to manufacture the airless tire 1 that can exhibit excellent durability.

In the preheating step, the adhesive 33 is preferably preheated such that the temperature of the adhesive 33 becomes 100 to 180°C. When the adhesive 33 is preheated such that the temperature of the adhesive 33 is not lower than 100°C, the adhesive 33 can be activated and cured reliably. Accordingly, falling of the adhesive 33 from the inner circumferential surface 2b of the tread ring 2 can be prevented, so that it is possible to manufacture the airless tire 1 that can exhibit excellent durability.

On the other hand, when the adhesive 33 is preheated such that the temperature of the adhesive 33 is not higher than 180°C, the deterioration of the adhesive 33 can be suppressed, and a decrease in the adhesive force with the thermoplastic resin 8 (shown in FIG. 6) can be prevented. Therefore, it is possible to manufacture the airless tire 1 that can exhibit excellent durability. In order to effectively exert such an effect, the temperature of the adhesive 33 is preferably not lower than 120°C and is preferably not higher than 160°C.

The preheating time of the adhesive 33 is preferably 5 to 120 minutes. When the preheating time of the adhesive 33 is set so as to be not shorter than 5 minutes, the temperature of the adhesive 33 can be increased to reliably cure the adhesive 33. On the other hand, when the preheating time of the adhesive 33 is set so as to be not longer than 120 minutes, the deterioration of the adhesive 33 can be suppressed, and a decrease in the adhesive force with the thermoplastic resin 8 (shown in FIG. 6) can be prevented. In order to effectively exert such an effect, the preheating time of the adhesive 33 is preferably not shorter than 15 minutes and is preferably not longer than 100 minutes.

The adhesive 33 can be preheated as appropriate, for example, by using a warmer (not shown) provided separately from the integral molding mold 10. In addition, the adhesive 33 may be preheated separately from preheating of the tread ring 2, or may be preheated together with the tread ring 2. When the adhesive 33 is preheated together with the tread ring 2, the time required to preheat the adhesive 33 and the tread ring 2 can be shortened, so that the productivity of the airless tire 1 can be improved.

### [Applying Adhesive to Outer Circumferential Surface of Hub]

In the present embodiment, a step of applying the adhesive 34 to the outer circumferential surface 3e of the hub 3 prior to the step of placing the tread ring 2 and the hub 3 shown in FIG. 5 ("Placing Tread Ring And Hub in Integral Molding Mold" described above) may be further included. The adhesive 34 is for enhancing the adhesiveness with the thermoplastic resin 8 (shown in FIG. 6).

The adhesive 34 can be selected as appropriate as long as the adhesiveness with the thermoplastic resin 8 (shown in FIG. 6) can be enhanced. As the adhesive 34 of the present embodiment, an adhesive that is the same as the adhesive 33 to be applied to the inner circumferential surface 2b of the tread ring 2 can be adopted.

In the manufacturing method according to the present embodiment, the adhesive force between the hub 3 and the thermoplastic resin 8 (shown in FIG. 6), which forms the spoke portion 4, can be enhanced by applying the adhesive 34 to the outer circumferential surface 3e of the hub 3. Therefore, in the present embodiment, it is possible to manufacture the airless tire 1 that can exhibit excellent durability, while improving the moldability of the airless tire 1.

A layer thickness of the adhesive 34 is preferably set to 5 to 50 µm from the same viewpoint as the adhesive 33 to be applied to the inner circumferential surface 2b of the tread ring 2. In addition, a step of preheating the adhesive 34 may be further included in order to prevent falling of the adhesive 34 from the outer circumferential surface 3e of the hub 3.

The step of preheating the adhesive 34 is preferably performed prior to the step of placing the tread ring 2 and the hub 3 ("Placing Tread Ring And Hub in Integral Molding Mold" described above). In addition, the adhesive 34 can be preheated as appropriate, for example, by using a warmer (not shown) provided separately from the integral molding mold 10. The temperature and the preheating time of the adhesive 34 are preferably set within the same ranges for the temperature and the preheating time of the adhesive 33 to be applied to the inner circumferential surface 2b of the tread ring 2.

Although the particularly preferred embodiments of the present invention have been described in detail above, the present invention is not limited to the above-described embodiments, and various modifications can be made to practice the present invention.

### EXAMPLES

Hereinafter, more specific and non-limiting examples of the present invention will be described.

### [Example A]

An airless tire (tire having a tire size corresponding to 145/70R12) having the basic structure in FIGS. 1 to 3 was produced as a test tire and evaluated for durability (Example 1). The manufacturing method for the airless tire of Example 1 is as follows.

In the manufacturing method of Example 1, a tread ring formed from a vulcanized rubber and a hub formed from an aluminum alloy were prepared. The tread ring was vulcanized under the conditions of 170°C and 15 minutes. An outer reinforcing cord layer and an inner reinforcing cord layer are disposed inside the tread ring. The details of these layers are as follows.

### <Outer Reinforcing Cord Layer>

Number of plies: 2
Reinforcing cord: steel cord
Cord angle: +21 degrees/-21 degrees

### <Inner Reinforcing Cord Layer>

Number of plies: 2
Reinforcing cord: steel cord
Cord angle: +21 degrees/-21 degrees

Next, in the manufacturing method of Example 1, an adhesive (trade name "Chemlock" manufactured by Lord Corporation) was applied to the inner circumferential surface of the tread ring and the outer circumferential surface of the hub. The layer thickness of the adhesive was set to 30 µm. In Example 1, the adhesive and the tread ring were preheated.

Next, in Example 1, the tread ring and the hub were placed in an integral molding mold. Then, in Example 1, a thermoplastic resin (thermoplastic polyester resin) was injected between the tread ring and the hub in the integral molding mold. Accordingly, a spoke portion connecting the tread ring and the hub was molded, so that an airless tire was manufactured.

For comparison, an airless tire having the same structure as Example 1 except for the spoke portion was manufactured based on the manufacturing method of Japanese Laid-Open Patent Publication No. 2018-153932. In Comparative Example 1, a prepared tread ring and hub were placed in a mold, and a thermosetting resin was injected therebetween. Then, by thermally curing the thermosetting resin, a spoke portion connecting the tread ring and the hub was molded, so that an airless tire was manufactured.

Then, in Example 1 and Comparative Example 1, the molding time of the spoke portion of one airless tire was measured. Furthermore, in Example 1 and Comparative Example 1, the number of burrs formed at the spoke portion and the number of air bubbles remaining on the surface of the spoke portion were visually checked. The test results are shown in Table 1.

**[Table 1]**

| | Comparative Example 1 | Example 1 |
|---|---|---|
| Resin for spoke portion | Thermosetting resin | Thermoplastic resin |
| Molding time of spoke portion (min) | 90 | 15 |
| Presence/absence of burrs at spoke portion | Many | Absence |
| Number of air bubbles at spoke portion | 12 | 0 |

As a result of the test, in Example 1, the time required to mold the spoke portion was significantly shortened as compared with that in Comparative Example 1. Furthermore, in Example 1, the occurrence of burrs and remaining of air bubbles were prevented as compared with those in Comparative Example 1. Therefore, in Example 1, the productivity of the airless tire was improved as compared with that in Comparative Example 1.

### [Example B]

Airless tires (having the same tire size as in Example A) having the basic structure in FIGS. 1 to 3 were produced as test tires and evaluated for durability (Examples 2 to 6). The manufacturing procedure of Examples 2 to 6 is substantially the same as that of Example 1. However, in Examples 2 to 6, the thermoplastic resin was injected at different temperatures of a cylinder.

Then, the airless tires of Examples 2 to 6 were evaluated for durability. In the durability evaluation, each tire was caused to run under the conditions of a speed of 60 km/h and a load of 2 kN using a drum tester. Then, the running distance until damage to the tire occurred was measured. The durability was indicated as an index with the value of Example 4 being regarded as 100. A higher value indicates that the durability is better. A durability index of 80 or higher indicates that the durability is good, and a durability index of 95 or higher indicates that the durability is very excellent. The test results are shown in Table 2.

**[Table 2]**

| | Example 2 | Example 3 | Example 4 | Example 5 | Example 6 |
|---|---|---|---|---|---|
| Temperature of cylinder (thermoplastic resin) (°C) | 170 | 180 | 220 | 250 | 270 |
| Durability (index) | 80 | 92 | 100 | 98 | 86 |

As a result of the test, in Examples 3 to 5 in which the temperature of the cylinder was in a preferable range, the durability of the airless tire was improved as compared with that in the other Example 2 and Example 6.

### [Example C]

Airless tires (having the same tire size as in Example A) having the basic structure in FIGS. 1 to 3 were produced as test tires and evaluated for durability (Examples 7 to 12). The manufacturing procedure of Examples 7 to 12 is substantially the same as that of Example 1. However, in Examples 7 to 12, the adhesive was preheated such that the temperatures of the preheated adhesive were different from each other.

Then, the airless tires of Examples 7 to 12 were evaluated for durability. The durability was evaluated by the same method as in Example B, and is indicated as an index with the value of Example 10 being regarded as 100. The test results are shown in Table 3.

**[Table 3]**

| | Example 7 | Example 8 | Example 9 | Example 10 | Example 11 | Example 12 |
|---|---|---|---|---|---|---|
| Whether or not adhesive was preheated | No | Yes | Yes | Yes | Yes | Yes |
| Temperature of preheated adhesive (°C) | - | 90 | 100 | 120 | 180 | 200 |
| Durability (index) | 80 | 92 | 99 | 100 | 98 | 85 |

As a result of the test, in Examples 8 to 12 in which the adhesive was preheated, the durability of the airless tire was improved as compared with that in Example 7 in which the adhesive was not preheated. Furthermore, in Examples 9 to 11 in which the adhesive was preheated to a preferable temperature, the durability of the airless tire was effectively improved as compared with that in the other Examples 8 and 12.

## Claims

1. A manufacturing method for an airless tire (1) including an annular tread ring (2) having a ground-contact surface (2a), a hub (3) disposed inward of the tread ring (2) in a tire radial direction, and a spoke portion (4) connecting the tread ring (2) and the hub (3), the manufacturing method comprising:
a step of preparing the tread ring (2) and the hub (3);
a step of placing the tread ring (2) and the hub (3) in an integral molding mold (10);
a step of injecting a thermoplastic resin (8) between the tread ring (2) and the hub (3) in the integral molding mold (10) and molding the spoke portion (4) connecting the tread ring (2) and the hub (3), to integrally mold the airless tire (1); and
a step of taking out the airless tire (1) from the integral molding mold (10),
**characterized in that**
the method further comprises a step of applying an adhesive (33) for enhancing adhesiveness with the thermoplastic resin (8) to an inner circumferential surface of the tread ring (2) prior to the placing step.

2. The manufacturing method for the airless tire (1) according to claim 1, further comprising a step of applying an adhesive (34) for enhancing adhesiveness with the thermoplastic resin (8) to an outer circumferential surface of the hub (3) prior to the placing step.

3. The manufacturing method for the airless tire (1) according to claim 1 or 2, wherein a layer thickness of the adhesive (33, 34) is 5 to 50 µm.

4. The manufacturing method for the airless tire (1) according to any one of claims 1 to 3, further comprising a step of preheating the adhesive (33, 34).

5. The manufacturing method for the airless tire (1) according to any one of claims 1 to 4, further comprising a step of preheating the tread ring (2) such that a surface temperature of the tread ring (2) is not lower than 50°C.

6. The manufacturing method for the airless tire (1) according to any one of claims 1 to 5, wherein the thermoplastic resin (8) includes a polyester resin, a polyamide resin, or a polyurethane resin.

7. The manufacturing method for the airless tire (1) according to any one of claims 1 to 6, wherein the integral molding mold (10) includes a first cavity portion (21) for accommodating the tread ring (2), a second cavity portion (22) for accommodating the hub (3), and a third cavity portion (23) for molding the spoke portion (4), the third cavity portion (23) communicating with the first cavity portion (21) and the second cavity portion (22).

8. The manufacturing method for the airless tire (1) according to claim 7, wherein an injection gate for the thermoplastic resin (8) communicates with the hub (3) side of the third cavity portion.

9. The manufacturing method for the airless tire (1) according to any one of claims 1 to 8, wherein the thermoplastic resin (8) is injected by a cylinder whose temperature has been adjusted to 180 to 250°C.

## Patentansprüche

1. Herstellungsverfahren für einen luftlosen Reifen (1), der einen kreisringförmigen Laufflächenring (2) mit einer Bodenkontaktfläche (2a), eine Nabe (3), die in einer radialen Richtung des Reifens innen von dem Laufflächenring (2) angeordnet ist, und einen Speichenabschnitt (4) umfasst, der den Laufflächenring (2) und die Nabe (3) verbindet, wobei das Herstellungsverfahren umfasst:
einen Schritt eines Vorbereitens des Laufflächenrings (2) und der Nabe (3);
einen Schritt eines Einlegens des Laufflächenrings (2) und der Nabe (3) in eine integrale Gussform (10);
einen Schritt eines Einspritzens eines thermoplastischen Harzes (8) zwischen den Laufflächenring (2) und die Nabe (3) in die integrale Form (10) und des Formens des Speichenabschnitts (4), der den Laufflächenring (2) und die Nabe (3) verbindet, um den luftlosen Reifen (1) integral zu formen; und
einen Schritt eines Entnehmens des luftlosen Reifens (1) aus der integralen Gussform (10),
**dadurch gekennzeichnet, dass**
das Verfahren ferner einen Schritt eines Auftragens eines Klebstoffs (33) zur Verbesserung der Haftfähigkeit mit dem thermoplastischen Harz (8) auf eine Innenumfangsfläche des Laufflächenrings (2) vor dem Einlegeschritt umfasst.

2. Herstellungsverfahren für den luftlosen Reifen (1) nach Anspruch 1, das ferner einen Schritt eines Auftragens eines Klebstoffs (34) zur Verbesserung der Haftfähigkeit mit dem thermoplastischen Harz (8) auf eine Außenumfangsfläche der Nabe (3) vor dem Einlegeschritt umfasst.

3. Herstellungsverfahren für den luftlosen Reifen (1) nach Anspruch 1 oder 2, wobei eine Schichtdicke des Klebstoffs (33, 34) 5 bis 50 µm beträgt.

4. Herstellungsverfahren für den luftlosen Reifen (1) nach einem der Ansprüche 1 bis 3, das ferner einen Schritt eines Vorwärmens des Klebstoffs (33, 34) umfasst.

5. Herstellungsverfahren für den luftlosen Reifen (1) nach einem der Ansprüche 1 bis 4, das ferner einen Schritt eines Vorwärmens des Laufflächenrings (2) umfasst, so dass eine Oberflächentemperatur des Laufflächenrings (2) nicht unter 50°C liegt.

6. Herstellungsverfahren für den luftlosen Reifen (1) nach einem der Ansprüche 1 bis 5, wobei das thermoplastische Harz (8) ein Polyesterharz, ein Polyamidharz oder ein Polyurethanharz umfasst.

7. Herstellungsverfahren für den luftlosen Reifen (1) nach einem der Ansprüche 1 bis 6, wobei die integrale Gussform (10) einen ersten Hohlraumabschnitt (21) zur Aufnahme des Laufflächenrings (2), einen zweiten Hohlraumabschnitt (22) zur Aufnahme der Nabe (3) und einen dritten Hohlraumabschnitt (23) zum Formen des Speichenabschnitts (4) umfasst, wobei der dritte Hohlraumabschnitt (23) mit dem ersten Hohlraumabschnitt (21) und dem zweiten Hohlraumabschnitt (22) in Verbindung steht.

8. Herstellungsverfahren für den luftlosen Reifen (1) nach Anspruch 7, wobei eine Einspritzöffnung für das thermoplastische Harz (8) mit der Seite der Nabe (3) des dritten Hohlraumabschnitts in Verbindung steht.

9. Herstellungsverfahren für den luftlosen Reifen (1) nach einem der Ansprüche 1 bis 8, wobei das thermoplastische Harz (8) durch einen Zylinder eingespritzt wird, dessen Temperatur auf 180 bis 250°C eingestellt worden ist.

## Revendications

1. Procédé de fabrication d'un bandage sans air (31) incluant un cercle formant bande de roulement annulaire (2) ayant une contact de surface au sol (2a), un moyeu (3) disposé à l'intérieur du cercle formant bande de roulement (2) dans une direction radiale du bandage, et une portion formant rayons (4) connectant le cercle formant bande de roulement (2) et le moyeu (3), le procédé de fabrication comprenant :
une étape consistant à préparer le cercle formant bande de roulement (2) et le moyeu (3) ;
une étape consistant à placer le cercle formant bande de roulement (2) et le moyeu (3) dans un moule de moulage intégral (10) ;
une étape consistant à injecter une résine thermoplastique (8) entre le cercle formant bande de roulement (2) et le moyeu (3) dans le moule de moulage intégral (10) et à mouler la portion formant rayons (4) connectant le cercle formant bande de roulement (2) et le moyeu (3), pour mouler de manière intégrale le bandage sans air (1) ; et
une étape consistant à retirer le bandage sans air (1) hors du moule de moulage intégral (10),
**caractérisé en ce que**
le procédé comprend en outre une étape consistant à appliquer un adhésif (33) destiné à améliorer une adhérence avec la résine thermoplastique (8) sur une surface circonférentielle intérieure du cercle formant bande de roulement (2) avant l'étape de placement.

2. Procédé de fabrication du bandage sans air (1) selon la revendication 1, comprenant en outre une étape consistant à appliquer un adhésif (34) destiné à améliorer une adhérence avec la résine thermoplastique (8) sur une surface circonférentielle extérieure du moyeu (3) avant l'étape de placement.

3. Procédé de fabrication du bandage sans air (1) selon la revendication 1 ou 2, dans lequel une épaisseur de couche de l'adhésif (33, 34) est de 5 à 50 µm.

4. Procédé de fabrication du bandage sans air (1) selon l'une quelconque des revendications 1 à 3, comprenant en outre une étape consistant à préchauffer l'adhésif (33, 34).

5. Procédé de fabrication du bandage sans air (1) selon l'une quelconque des revendications 1 à 4, comprenant en outre une étape consistant à préchauffer le cercle formant bande de roulement (2) de telle sorte qu'une température de surface du cercle formant bande de roulement (2) n'est pas inférieure à 50 °C.

6. Procédé de fabrication du bandage sans air (1) selon l'une quelconque des revendications 1 à 5, dans lequel la résine thermoplastique (8) inclut une résine polyester, une résine polyamide ou une résine polyuréthane.

7. Procédé de fabrication du bandage sans air (1) selon l'une quelconque des revendications 1 à 6, dans lequel le moule de moulage intégral (10) inclut une première portion de cavité (21) destinée à loger le cercle formant bande de roulement (2), une deuxième portion de cavité (22) destinée à loger le moyeu (3), et une troisième portion de cavité (23) destinée à mouler la portion formant rayons (4), la troisième portion de cavité (23) communiquant avec la première portion de cavité (21) et la deuxième portion de cavité (22).

8. Procédé de fabrication du bandage sans air (1) selon la revendication 7, dans lequel une porte d'injection pour la résine thermoplastique (8) communique avec le côté du moyeu (3) de la troisième portion de cavité.

9. Procédé de fabrication du bandage sans air (1) selon l'une quelconque des revendications 1 à 8, dans lequel la résine thermoplastique (8) est injectée par un cylindre dont la température a été ajustée pour atteindre 180 à 250 °C.
